# EUROPÄISCHE PATENTSCHRIFT

(11) **EP 1 647 399 B1**
(45) Veröffentlichungstag und Bekanntmachung des Hinweises auf die Patenterteilung: **11.11.2009**
(21) Anmeldenummer: 05021240.6
(22) Anmeldetag: 29.09.2005
(51) Int. Cl.: B32B 27/40, B29C 45/14, C08G 18/08

(54) **Mit Soft-Touch-Lack beschichtete, verformbare Kunststoffverbundfolien und Kunststoffverbundelemente sowie deren Herstellung**
Deformable composite plastic film coated with a soft touch lacquer, and plastic composite structures and method of its manufacture
Feuille plastique stratifiée, déformable, revêtue d' une peinture "soft touch" et structures plastiques stratifiées et leur méthode de production

(30) Priorität: 12.10.2004 DE 102004049592
(43) Veröffentlichungstag der Anmeldung: 19.04.2006
(73) Patentinhaber: Bayer MaterialScience AG, 51368 Leverkusen (DE)
(72) Erfinder: Pudleiner, Heinz, Dr., 47800 Krefeld (DE); Pohl, Torsten, Dr., 50670 Köln (DE); Klippert, Uwe, 51399 Burscheid (DE); Meyer, Klaus, 41539 Dormagen (DE); Post, Bernd, 47447 Moers (DE); Berger, Armin, 40764 Langenfeld (DE); Rische, Thorsten, Dr., 59423 Unna (DE)

(56) Entgegenhaltungen:
- EP-A- 1 418 192
- WO-A-03/014403
- DE-A1- 4 228 282
- BUERKLE E ET AL: "HINTERPSRITZEN UND HINTERPRESSEN IN-MOULD LAMINATION BY INJECTION AND COMPRESSION MOULDING PROCESSES" KUNSTSTOFFE, CARL HANSER VERLAG, MUNCHEN, DE, Bd. 86, Nr. 3, 1. März 1996 (1996-03-01), Seiten 298-300,303, XP000587702 ISSN: 0023-5563

## Beschreibung

Die Erfindung betrifft Verbundformteile aus thermoplastisch verformbaren Verbundfolien aus einer Schicht aus einem Soft-Touch-Lack und einer Trägerfolie, insbesondere einer Polycarbonat-Folie sowie einer Schicht aus einem hinterspritzten, hintergossenen oder hinterpressten thermoplastischen Kunststoff sowie ein Verfahren zur Herstellung der genannten Verbundelemente bzw. Verbundfolien und deren Verwendung in Telekommunikationsgeräten und im Fahrzeug-, Schiff- und Flugzeugbau.

Mit Soft-Touch-Lack beschichtete Kunststoffelemente und Verfahren zu deren Herstellung sind allgemein bekannt. In der Regel wird ein Verbundelement aus einer Soft-Touch-Schicht und dem Kunststoffbauteil mittels nachträglicher Lackierung des Bauteils hergestellt. Insbesondere im Automobilbau ist dieses die bevorzugte Vorgehensweise, wenn großflächige Bauteile oder solche mit komplexer Geometrie zu fertigen sind. Dieses nachträgliche Aufbringen der Soft-Touch-Schicht erfordert allerdings eine Vielzahl separater Arbeitsschritte, die zum Teil manuell ausgeführt werden müssen und sich nicht automatisieren lassen. Darüber hinaus können bestimmte Teilflächen des Bauteils mit der Soft-Touch-Schicht nur sehr aufwändig lackiert werden. Bei der Lackierung dreidimensional geformter Körper ist ferner mit nicht unwesentlichem Materialverlust des Soft-Feel-Lackes durch das sogenannte Overspray zu rechnen. Außerdem ist der Anteil an fehlerfrei-lackierten dreidimensionalen Teilen deutlich geringer als bei der technisch einfacheren Lackierung von zweidimensionalen Folien.

Um zu einem effizienten, rohstoffsparenden und kostengünstigen Verfahren zu gelangen, hat man versucht, Verbundfolien mit einem Kunststoffmaterial direkt in einem Arbeitsgang zu hinterspritzen oder zu hinterpressen. Hierbei wird jedoch regelmäßig die Soft-Touch-Schicht aufgrund der auftretenden hohen Verarbeitungstemperaturen in Mitleidenschaft gezogen. Beispielsweise werden punktuelle oder flächige Glanzstellen beobachtet. Um die empfindlichen Schichten beim Hinterspritzen nicht zu beschädigen, werden unterschiedliche Lösungen vorgeschlagen.

In EP-B 529 094 werden Formteile aus einem Substrat und einer Deckfolie beschrieben, wobei die Deckfolie aus einer Harzzusammensetzung (Lack) und einer geschäumten Schicht besteht. Die Harzzusammensetzung gibt der Deckfolie einen weichen Griff und besteht aus einem Urethanharz, Isocyanat, Härtungsmittel und elastischen Kunststoffperlen und/oder porösen anorganischen Materialpartikeln. Die speziellen Perlen und/oder Partikel mit einer Ölabsorption von mehr als 50 ml/100 g vermitteln das Soft-Touch-Gefühl.

Das Dokument D1 (WO 03/014403 A) offenbart Verbundbauteile mit einem hochwertigen Soft-Touch sowie deren Verwendung im Fahrzeug-, Flugzeug-, Schiff- und Möbelbau. Diese Verbundbauteile beinhalten in dieser Reihenfolge eine Schicht aus einem Dekormaterial (A), eine Schicht aus einem mikrozelligen Polyisocyanat-Polyadditions-Elastomer (B) und eine Schicht aus einem hinterspritzten, hintergossenen oder hinterpressten thermoplastischen Kunststoff (C). Als Dekormaterial wird bevorzugt auf Leder zurückgegriffen (Anspruch 4 von D1).

Das Dokument D2 (EP-A-1 418 192) offenbart Softfeel-Effekt-Lacke (Tabelle 1, Ansätze 1-6 von D2).

Aufgabe war es daher, Verbundformteile aus Kunststoff mit einer Soft-Touch-Oberfläche zur Verfügung zu stellen, die einfach herzustellen sind und deren Soft-Touch-Oberfläche bei der Formgebung und dem Hinterspritzen mit Kunststoff nicht in Mitleidenschaft gezogen wird.

Diese Aufgabe konnte mit den erfindungsgemäßen Verbundformteilen und deren Herstellung gelöst werden.

Gegenstand der Erfindung sind Verbundformteile aus Kunststoff bestehend aus:
A) einer thermoplastisch verformbaren, wärmebeständigen Verbundfolie aus
   A1) einer Trägerfolie aus thermoplastischem Kunststoff
   A2) einer Schicht aus einem wärmebeständigen Soft-Touch-Lack (Lack mit weichem Griff) auf einer Seite der Trägerfolie (A1) und
B) einer thermoplastischen Kunststoffschicht auf der dem Soft-Touch-Lack abgewandten Seite der Trägerfolie (A1),
   dadurch gekennzeichnet, dass der Soft-Touch-Lack (A2) aus
   i) hydroxyl- und/oder amingruppenfreien Polyurethanen und/oder Polyurethanharnstoffen
   ii) ionisch modifizierten, hydroxyl- und/oder amingruppenhaltigen Polyurethanen und/oder Polyurethanharnstoffen
   iii) mindestens einem Vernetzer und
   iv) gegebenenfalls filmbildenden Harzen
   v) gegebenenfalls Hilfsstoffen und/oder Zusatzmitteln
   erhältlich ist.

Die erfindungsgemäß eingesetzten Soft-Touch-Lacke enthalten keine porösen anorganischen Füllstoffe, um den gewünschten weichen Griff zu erzeugen, und lassen sich gut verformen.

Bevorzugt werden Folien aus Polycarbonat und Blends aus Polycarbonat und anderen Kunststoffen eingesetzt. Die Soft-Touch-Schicht haftet sehr gut auf der Trägerfolie.

Elastifizierende Klebe- oder Schaum-Schichten werden nicht benötigt. Die Haftung der Soft-Touch-Schicht auf der Trägerfolie und die Dehnbarkeit der Soft-Touch-Schicht sind ausreichend, um den Verformungsschritt ohne Rissbildung oder Weißbruch unbeschadet zu überstehen.

Ein weiterer Gegenstand der Erfindung ist ein Verfahren zur Herstellung der erfindungsgemäßen Verbundformteile, wobei
I) eine thermoplastisch verformbare, wärmebeständige Verbundfolie (A) aus einer Trägerfolie (A1) aus thermoplastischem Kunststoff und einer Beschichtung (A2) aus einem Soft-Touch-Lack auf einer Seite der Trägerfolie (A1) vorgelegt wird und
II) die Verbundfolie (A) mit einem thermoplastischen Kunststoff auf der dem Soft-Touch-Lack abgewandten Seite hinterspritzt, hinterpresst, hintergossen oder hinterschäumt wird, wobei
   der Soft-Touch-Lack aus
   i) hydroxyl- und/oder amingruppenfreien Polyurethanen und/oder Polyurethanharnstoffen
   ii) ionisch modifizierten, hydroxyl- und/oder amingruppenhaltigen Polyurethanen und/oder Polyurethanharnstoffen
   iii) mindestens einem Vernetzer
   iv) gegebenenfalls filmbildenden Harzen und
   v) gegebenenfalls Hilfsstoffen und/oder Zusatzmitteln
      erhältlich ist.

Das Hinterspritzen der gegebenenfalls bedruckten und verformten, mit Soft-Touch-Lack beschichteten Trägerfolie erfolgt mit thermoplastischen Kunststoffen. Es kann sogar mit Polycarbonat erfolgen, bei einer Massetemperatur von ca. 300°C. Dabei bleibt die Soft-Touch-Schicht unbeschadet erhalten. Glanzstellen, die darauf hinweisen würden, dass die Soft-Touch-Schicht geschädigt ist, können nicht festgestellt werden.

Die für die erfindungsgemäßen Verbundformteile eingesetzten Verbundfolien weisen eine gute Haftung, Verformbarkeit, Dehnbarkeit, Optik und Haptik auf und zeigen keine Rissbildung bei Verformung. Die Beschichtung eignet sich auch für Klarlackanwendungen.

Die erfindungsgemäß eingesetzte Verbundfolie weist auf einer Seite zumindest in Teilbereichen eine Soft-Touch-Schicht auf, die sich ohne Rissbildung oder sogenannten "Weißbruch" zu dreidimensionalen Bauteilen verformen lässt.

Die Soft-Touch-Schicht weist ausreichende Haftung auf der Trägerfolie auf und löst sich beim Verformen nicht von der Trägerfolie ab.

Die erfindungsgemäßen Verbundelemente werden vorzugsweise in Telekommunikationsgeräten sowie im Fahrzeug-, Flugzeug- und Schiffsbau eingesetzt.

Das erfindungsgemäße Verfahren zeichnet sich dadurch aus, dass die Verbundfolie aus der Soft-Touch-Schicht und der Trägerfolie, die gegebenenfalls bedruckt sein kann, zu einem dreidimensionalen Formteil verformt wird. Dieses Formteil wird in eine Werkzeugform eingelegt, wobei die Soft-Touch-Schicht an der Werkzeugwandung anliegt und rückseitig mit einem thermoplastischen Kunststoff hinterspritzt, hintergossen oder hinterpresst wird. Das Verfahren kann in mehreren separaten Schritten oder in einem Verfahrensschritt durchgeführt werden. Im allgemeinen wird die zunächst verformte Verbundfolie in eine Werkzeugform eingelegt und anschließend fixiert, bevor sie hinterspritzt wird. Die Fixierung erfolgt üblicherweise durch elektrostatische Aufladung, Nadeln, Spannhaken, Spannrahmen, punktuelles Kleben oder mittels Ansaugen. Das Formteil kann auch hinterschäumt werden.

Die erfindungsgemäßen Verbundformteile können typischerweise nach dem Vakuumverfahren, dem Pressluftverfahren und dem Thermo- oder Hydroformverfahren geformt und tiefgezogen werden. Das bevorzugte Verfahren ist jedoch das Hochdruckverformungsverfahren.

Überraschenderweise erfüllen Kombinationen aus ionisch modifizierten, hydroxy- und/oder aminfunktionellen Polyurethanen und/oder -harnstoffen, hydroxyl- und/oder amingruppenfreien Polyurethanen und/oder -harnstoffen sowie Vernetzern das gewünschte Anforderungsprofil für den Soft-Touch-Lack und zur Herstellung von Verbundformteilen mittels der entsprechenden Verbundfolien.

Die erfindungsgemäß eingesetzten Soft-Touch-Lacke enthalten
I) hydroxyl- und/oder amingruppenfreien Polyurethanen und/oder Polyurethanharnstoffen,
II) ionisch modifizierten, hydroxyl- und/oder amingruppenhaltigen Polyurethanen und/oder Polyurethanharnstoffen,
(III) mindestens einem Vernetzer,
(IV) gegebenenfalls weiteren filmbildenden Harzen,
(V) Hilfsmitteln und/oder Zusatzstoffen.

Die nichtfunktionellen Verbindungen (I) sowie die funktionellen vernetzbaren Verbindungen (II) sind aus folgenden Komponenten erhältlich:
(1) Polyisocyanaten,
(2) polymeren Polyolen mit zahlenmittleren Molekulargewichten von 200 bis 8000 g/mol,
(3) niedermolekularen Verbindungen des Molgewichts 62 bis 400, die in Summe über zwei oder mehr Hydroxyl- und/oder Aminogruppen verfügen,
(4) Verbindungen, die über eine Hydroxy- oder Aminogruppe verfügen (Kettenabbrecher),
(5) isocyanatreaktiven, ionisch oder potentiell ionisch hydrophilierenden Verbindungen,
(6) isocyanatreaktiven, nichtionisch hydrophilierenden Verbindungen.

Die Softfeel-Lacke (Soft-Touch-Lacke) können auch in Form geschäumter Softfeel-Beschichtungen eingesetzt werden. Dabei kann bei wässrigen, lösemittelhaltigen oder auch lösemittelfreien Softfeel-Formulierungen durch mechanischen Aufschäumen oder entsprechende Verarbeitungsbedingungen eine Schaumstruktur erzeugt werden, die sich durch eine sehr gute Haptik und eine sehr gute Kratzbeständigkeit auszeichnet. Solche Beschichtungen lassen sich schadensfrei, d.h. ohne Weißbruch oder Haftungsverlust und ohne Veränderung der Haptik und Optik verformen und zu Verbundformteilen verarbeiten.

Geeignete Polyisocyanate (1) sind die dem Fachmann an sich bekannten aromatischen, araliphatischen, aliphatischen oder cycloaliphatischen Polyisocyanate einer NCO-Funktionalität von bevorzugt ≥ 2, welche auch Iminooxadiazindion-, Isocyanurat-, Uretdion-, Urethan-, Allophanat-, Biuret-, Harnstoff-, Oxadiazintrion, Oxazolidinon-, Acylharnstoff und/oder Carbodiimid-Strukturen aufweisen können. Diese können einzeln oder in beliebigen Mischungen untereinander eingesetzt werden.

Beispiele geeigneter Polyisocyanate sind Butylendiisocyanat, Hexamethylendiisocyanat (HDI), Isophorondiisocyanat (IPDI), 2,2,4 und/oder 2,4,4-Trimethylhexamethylendiisocyanat, die isomeren Bis(4,4'-isocyanatocyclohexyl)methane oder deren Mischungen beliebigen Isomerengehalts, Isocyanatomethyl-1,8-octandiisocyanat, 1,4-Cyclohexylendiisocyanat, 1,4-Phenylendiisocyanat, 2,4- und/oder 2,6-Toluylendiisocyanat, 1,5-Naphthylendiisocyanat, 2,4'- oder 4,4'-Diphenylmethandiisocyanat, Triphenylmethan-4,4',4"-triisocyanat oder Derivate basierend auf den vorstehend genannten Diisocyanaten mit Uretdion-, Isocyanurat-, Urethan-, Allophanat-, Biuret-, Iminooxadiazindion- und/oder Oxadiazintrionstruktur mit mehr als 2 NCO Gruppen wie sie beispielhaft in J. Prakt. Chem. 336 (1994) S. 185 - 200 beschrieben werden.

Als Beispiel für ein nicht-modifiziertes Polyisocyanat mit mehr als 2 NCO-Gruppen pro Molekül sei z.B. 4-Isocyanatomethyl-1,8-octandiisocyanat (Nonantriisocyanat) genannt.

Bevorzugt handelt es sich um Polyisocyanate oder Polyisocyanatgemische der vorstehend genannten Art mit ausschließlich aliphatisch und/oder cycloaliphatisch gebundenen Isocyanatgruppen.

Besonders bevorzugt sind Hexamethylendiisocyanat, Isophorondiisocyanat, dem isomeren Bis-(4,4'-isocyanatocyclohexyl)methan sowie deren Mischungen.

Die unter (2) genannten Polyole weisen im allgemeinen eine zahlenmittlere OH-Funktionalität von mindestens 1,8 bis 4 auf. Bevorzugt verwendet werden Polyole in einem zahlenmittleren Molgewichtsbereich von 200 bis 8000 mit einer OH-Funktionalität von 2 bis 3. Besonders bevorzugt sind Polyole mit zahlenmittleren Molekulargewichtsbereichen von 200 bis 3000.

Als Verbindungen (2) einsetzbare Polyesterpolyole weisen bevorzugt ein zahlenmittleres Molekulargewicht von 400 bis 6000, besonders bevorzugt von 600 bis 3000 auf. Ihre Hydroxylzahl beträgt im Allgemeinen 22 bis 400, bevorzugt 50 bis 200 und besonders bevorzugt 80 bis 160 mg KOH/g. Sie weisen eine zahlenmittlere OH-Funktionalität von 1,5 bis 6, bevorzugt von 1,8 bis 3 und besonders bevorzugt von 2 auf.

Geeignete Verbindungen sind z.B. die an sich bekannten Polykondensate aus Di- sowie gegebenenfalls Poly(Tri,Tetra)olen und Di- sowie gegebenenfalls Poly(Tri,Tetra)carbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden. Beispiele für geeignete Diole sind Ethylenglykol, Butylenglykol, Diethylenglykol, Triethylenglykol, Polyalkylenglykole wie Polyethylenglykol, weiterhin Propandiol, Butandiol(1,4), Hexandiol(1,6), Neopentylglykol oder Hydroxypivalinsäureneopenthylglykolester, wobei die drei letztgenannten Verbindungen bevorzugt sind. Als gegebenenfalls mit einzusetzende Polyole sind hier beispielsweise Trimethylolpropan, Glycerin, Erythrit, Pentaerythrit, Triemthylolbenzol oder Trishydroxyethylisocyanurat zu nennen.

Als Dicarbonsäuren kommen beispielsweise in Frage Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlor-phthalsäure, Maleinsäure, Fumarsäure, Itaconsäure, Malonsäure, Korksäure, 2-Methylbernsteinsäure, 3,3-Diethylglutarsäure, 2,2-Dimethylbernsteinsäure. Anhydride dieser Säuren sind ebenfalls brauchbar, soweit sie existieren. Für die Belange der vorliegenden Erfindung werden die Anhydride infolgedessen durch den Ausdruck "Säure" umfasst. Es können auch Monocarbonsäuren, wie Benzoesäure und Hexancarbonsäure verwendet werden, vorausgesetzt, dass die mittlere Funktionalität des Polyols höher als 2 ist. Gesättigte aliphatische oder aromatische Säuren sind bevorzugt, wie Adipinsäure oder Isophthalsäure. Als gegebenenfalls in kleineren Mengen mitzuverwendende Polycarbonsäure sei hier Trimellitsäure genannt.

Hydroxycarbonsäuren, die als Reaktionsteilnehmer bei der Herstellung eines Polyesterpolyols mit endständigem Hydroxyl verwendet werden können, sind beispielsweise Hydroxycapronsäure, Hydroxybuttersäure, Hydroxydecansäure, Hydroxystearinsäure und dergleichen. Brauchbare Lactone sind u. a. Caprolacton, Butyrolacton und dergleichen.

Verbindungen der Komponente (2) können zumindest anteilig auch primäre oder sekundäre Aminogruppen als NCO-reaktive Gruppen enthalten.

Als Verbindungen (2) kommen ebenfalls Hydroxylgruppen aufweisenden Polycarbonate des zahlenmittleren Molekulargewichts von 400 bis 6000, bevorzugt 600 bis 3000 in Frage, die z.B. durch Reaktion von Kohlensäurederivaten, z.B. Diphenylcarbonat, Dimethylcarbonat oder Phosgen mit Polyolen, bevorzugt Diolen erhältlich sind. Als derartige Diole kommen z.B. Ethylenglykol, 1,2-und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A, Tetrabrombisphenol A, aber auch Lacton-modifizierte Diole in Frage. Bevorzugt enthält die Diolkomponente 40 bis 100 Gew.-% Hexandiol, bevorzugt 1,6-Hexandiol und/oder Hexandiol-Derivate, vorzugsweise solche, die neben endständigen OH-Gruppen Ether- oder Estergruppen aufweisen, z.B. Produkte, die durch Umsetzung von 1 Mol Hexandiol mit mindestens 1 Mol, bevorzugt 1 bis 2 Mol Caprolacton oder durch Veretherung von Hexandiol mit sich selbst zum Di- oder Trihexylenglykol erhalten wurden. Auch Polyether-Polycarbonatdiole können eingesetzt werden. Die Hydroxylpolycarbonate sollten im wesentlichen linear sein. Sie können jedoch gegebenenfalls durch den Einbau polyfunktioneller Komponenten, insbesondere niedermolekularer Polyole, leicht verzweigt werden. Hierzu eignen sich beispielsweise Glycerin, Trimethylolpropan, Hexantriol-1,2,6, Butantriol-1,2,4, Trimethylolpropan, Pentaerythrit, Chinit, Mannit, Sorbit, Methylglykosid oder 1,3,4,6-Dianhydrohexite.

Die Hydroxylpolycarbonate sind bevorzugt linear, können jedoch gegebenenfalls durch den Einbau polyfunktioneller Komponenten, insbesondere niedermolekularer Polyole, verzweigt werden.

Hierzu eignen sich beispielsweise Glycerin, Trimethylolpropan, Hexantriol-1,2,6, Butantriol-1,2,4, Trimethylolpropan, Pentaerythrit, Chinit, Mannit und Sorbit oder Methylglykosid und 1,3,4,6-Dianhydrohexite.

Als Polyetherpolyole entsprechend der Definition der Verbindungen (2) geeignet sind die in der Polyurethanchemie an sich bekannten Polytetramethylenglykolpolyether, die z.B. über Polymerisation von Tetrahydrofuran durch kationische Ringöffnung hergestellt werden können.

Darüber hinaus geeignete Polyetherpolyole sind Polyether, wie z.B. die unter Verwendung von Startermolekülen hergestellten Polyole aus Styroloxid, Ethylenoxid, Propylenoxid, Butylenoxide oder Epichlorhydrins, insbesondere des Propylenoxids.

Bevorzugt ist der Einsatz von Polyesterpolyolen und/oder Polycarbonatpolyolen.

Die zum Aufbau der Polyurethanharze eingesetzten niedermolekularen Polyole (3) bewirken in der Regel eine Versteifung und oder eine Verzweigung der Polymerkette. Das Molekulargewicht liegt bevorzugt zwischen 62 und 200. Geeignete Polyole können aliphatische, alicyclische oder aromatische Gruppen enthalten. Genannt seien hier beispielsweise die niedermolekularen Polyole mit bis zu etwa 12 Kohlenstoffatomen je Molekül, wie z. B. Ethylenglykol, Diethylenglykol, Triethylenglykol, 1,2-Propandiol, 1,3-Propandiol, 1,4-Butandiol, 1,3-Butylenglykol, Cyclohexandiol, 1,4-Cyclohexandimethanol, 1,6-Hexandiol, Hydrochinondihydroxyethylether, Bisphenol A (2,2-Bis(4-hydroxyphenyl)propan), hydriertes Bisphenol A (2,2-Bis(4-hydroxycyclohexyl)propan) sowie deren Mischungen, sowie Trimethylolpropan, Glycerin oder Pentaerythrit. Auch Esterdiole wie z.B. δ-Hydroxybutyl-ε-hydroxy-capronsäureester, ω-Hydroxyhexyl-γ-hydroxybuttersäure-ester, Adipinsäure-(β-hydroxyethyl)ester oder Terephthalsäurebis(β-hydroxyethyl)-ester können verwendet werden.

Di- oder Polyamine sowie Hydrazide können ebenfalls als Verbindung (3) eingesetzt werden, z.B. Ethylendiamin, 1,2- und 1,3-Diaminopropan, 1,4-Diaminobutan, 1,6-Diaminohexan, Isophorondiamin, Isomerengemisch von 2,2,4- und 2,4,4-Trimethylhexamethylendiamin, 2-Methylpentamethylendiamin, Diethylentriamin, 1,3- und 1,4-Xylylendiamin, α,α,α',α'-Tetramethyl-1,3- und -1,4-xylylendiamin und 4,4-Diaminodicyclohexylmethan, Dimethylethylendiamin, Hydrazin oder Adipinsäuredihydrazid.

Als Verbindung (3) kommen prinzipiell auch Verbindungen in Betracht, die aktiven Wasserstoff mit gegenüber NCO-Gruppen unterschiedlicher Reaktivität enthalten, wie Verbindungen, die neben einer primären Aminogruppe auch sekundäre Aminogruppen, oder neben einer Aminogruppe (primär oder sekundär) auch OH-Gruppen aufweisen. Beispiele hierfür sind primäre/sekundäre Amine, wie 3-Amino-1-Methylaminopropan, 3-Amino-1-Ethylaminopropan, 3-Amino-1-cyclohexylaminopropan, 3-Amino-1- Methylaminobutan, weiterhin Alkanolamine wie N-Aminoethylethanolamin, Ethanolamin, 3-Aminopropanol, Neopentanolamin und besonders bevorzugt Diethanolamin. Im Falle der Verwendung zur Herstellung der Komponente (I) werden diese als Kettenverlängerer und im Falle der Verwendung zur Herstellung der Komponente (II) als Kettenterminierung eingesetzt.

Das Polyurethanharz kann auch gegebenenfalls Bausteine (4) enthalten, die sich jeweils an den Kettenenden befinden und diese abschließen. Diese Bausteine leiten sich zum einen von monofunktionellen, mit NCO-Gruppen reaktiven Verbindungen ab, wie Monoaminen, insbesondere mono-sekundären Aminen oder Monoalkoholen. Genannt seien hier beispielsweise: Ethanol, n-Butanol, Ethylenglykol-monobutylether, 2-Ethylhexanol, 1-Octanol, 1-Dodecanol, 1-Hexadecanol, Methylamin, Ethylamin, Propylamin, Butylamin, Octylamin, Laurylamin, Stearylamin, Isononyloxypropylamin, Dimethylamin, Diethylamin, Dipropylamin, Dibutylamin, N-Methylaminopropylamin, Diethyl(methyl)aminopropylamin, Morpholin, Piperidin, bzw. geeignete substituierte Derivate davon, Amidamine aus diprimären Aminen und Monocarbonsäuren, Monoketimine von diprimären Aminen, primär/tertiäre Amine, wie N,N-Dimethylaminopropylamin und dergleichen.

Unter ionisch bzw. potentiell ionisch hydrophilierenden Verbindungen (5) werden sämtliche Verbindungen verstanden, die mindestens eine isocyanatreaktive Gruppe sowie mindestens eine Funktionalität, wie z.B. -COOY, -SO₃Y, -PO(OY)₂ (Y beispielsweise = H, NH₄⁺, Metallkation), -NR₂, -NR₃⁺ (R = H, Alkyl, Aryl), aufweisen, die bei Wechselwirkung mit wässrigen Medien ein pH-Wert-abhängiges Dissoziationsgleichgewicht eingehen und auf diese Weise negativ, positiv oder neutral geladen sein können. Bevorzugte isocyanatreaktive Gruppen sind Hydroxyl- oder Aminogruppen.

Geeignete ionisch oder potentiell ionisch hydrophilierende Verbindungen entsprechend der Definition der Komponente (5) sind z.B. Mono- und Dihydroxycarbonsäuren, Mono- und Diaminocarbonsäuren, Mono- und Dihydroxysulfonsäuren, Mono- und Diaminosulfonsäuren sowie Mono- und Dihydroxyphosphonsäuren oder Mono- und Diaminophosphonsäuren und ihre Salze wie Dimethylolpropionsäure, Dimethylolbuttersäure, Hydroxypivalinsäure, N-(2-Aminoethyl)-β-alanin, 2-(2-Amino-ethylamino)-ethansulfonsäure, Ethylendiamin-propyl- oder -butylsulfonsäure, 1,2- oder 1,3-Propylendiamin-β-ethylsulfonsäure, Äpfelsäure, Zitronensäure, Glykolsäure, Milchsäure, Glycin, Alanin, Taurin, Lysin, 3,5-Diaminobenzoesäure, ein Additionsprodukt von IPDI und Acrylsäure (EP-A 0 916 647, Beispiel 1) und dessen Alkali- und/oder Ammoniumsalze; das Addukt von Natriumbisulfit an Buten-2-diol-1,4, Polyethersulfonat, das propoxylierte Addukt aus 2-Butendiol und NaHSO₃, z.B. beschrieben in der DE-A 2 446 440 (Seite 5-9, Formel I-III) sowie Verbindungen, die in kationische Gruppen überführbare, z.B. Amin-basierende, Bausteine wie N-Methyl-diethanolamin als hydrophile Aufbaukomponenten enthalten. Weiterhin kann Cyclohexylaminopropansulfonsäure (CAPS), wie z.B. in der WO-A 01/88006 als Verbindung entsprechend der Definition der Komponente (5) verwendet werden.

Bevorzugte ionische oder potentiell ionische Verbindungen (5) sind solche, die über Carboxy- oder Carboxylat- und/oder Sulfonatgruppen und/oder Ammoniumgruppen verfügen. Besonders bevorzugte ionische Verbindungen (5) sind solche, die Carboxyl- und/oder Sulfonatgruppen als ionische oder potentiell ionische Gruppen enthalten, wie die Salze von N-(2-Aminoethyl)-β-alanin, der 2-(2-Amino-ethylamino-)ethansulfonsäure oder des Additionsproduktes von IPDI und Acrylsäure (EP-A 0 916 647, Beispiel 1) sowie der Dimethylolpropionsäure.

Bevorzugte ionische oder potentielle ionische Verbindungen (5) sind solche, die über Carboxy-und/oder Carboxylatgruppen verfügen. Besonders bevorzugte ionische Verbindungen (5) sind Dihydroxycarbonsäuren, ganz besonders bevorzugt sind α,α-Dimethylolalkansäuren, wie 2,2-Dimethylolessigsäure, 2,2-Dimethylolpropionsäure, 2,2-Dimethylolbuttersäure, 2,2-Dimethylolpentansäure oder Dihydroxybernsteinsäure.

Geeignete nichtionisch hydrophilierende Verbindungen entsprechend der Definition der Komponente (6) sind z.B. Polyoxyalkylenether, die mindestens eine Hydroxy- oder Aminogruppe enthalten. Diese Polyether enthalten einen Anteil von 30 Gew.-% bis 100 Gew.-% an Bausteinen, die vom Ethylenoxid abgeleitet sind.

Nichtionisch hydrophilierende Verbindungen sind beispielsweise auch einwertige, im statistischen Mittel 5 bis 70, bevorzugt 7 bis 55 Ethylenoxideinheiten pro Molekül aufweisende Polyalkylenoxidpolyetheralkohole, wie sie in an sich bekannter Weise durch Alkoxylierung geeigneter Startermoleküle zugänglich sind (z.B. in Ullmanns Encyclopädie der technischen Chemie, 4. Auflage, Band 19, Verlag Chemie, Weinheim S. 31-38).

Geeignete Startermoleküle sind beispielsweise gesättigte Monoalkohole wie Methanol, Ethanol, n-Propanol, Isopropanol, n-Butanol, Isobutanol, sec-Butanol, die Isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole oder Hydroxymethylcyclohexan, 3-Ethyl-3-hydroxymethyloxetan oder Tetrahydrofurfurylalkohol, Diethylenglykol-monoalkylether, wie beispielsweise Diethylenglykolmonobutylether, ungesättigte Alkohole wie Allylalkohol, 1,1-Dimethylallylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol, sekundäre Monoamine wie Dimethylamin, Diethylamin, Dipropylamin, Diisopropylamin, Dibutylamin, Bis-(2-ethylhexyl)-amin, N-Methyl- und N-Ethylcyclohexylamin oder Dicyclohexylamin sowie heterocyclische sekundäre Amine wie Morpholin, Pyrrolidin, Piperidin oder 1H-Pyrazol. Bevorzugte Startermoleküle sind gesättigte Monoalkohole. Besonders bevorzugt wird Diethylenglykolmonobutylether als Startermolekül verwendet.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Bei den Polyalkylenoxidpolyetheralkoholen handelt es sich entweder um reine Polyethylenoxidpolyether oder gemischte Polyalkylenoxidpolyether, deren Alkylenoxideinheiten zu mindestens 30 mol-%, bevorzugt zu mindestens 40 mol-% aus Ethylenoxideinheiten bestehen. Bevorzugte nichtionische Verbindungen sind monofunktionelle gemischte Polyalkylenoxidpolyether, die mindestens 40 mol-% Ethylenoxid- und maximal 60 mol-% Propylenoxideinheiten aufweisen.

Für die Komponente (I) werden bevorzugt eine Kombination aus ionischen und nicht-ionischen Hydrophilierungsmitteln entsprechend den Definitionen der Komponenten (5) und (6) verwendet. Besonders bevorzugt sind Kombinationen aus nichtionischen und anionischen Hydrophilierungsmitteln.

Bevorzugt werden 5 bis 45 Gew.-% Komponente (1), 50 bis 90 Gew.-% Komponente (2), 1 bis 30 Gew.-% der Summe von Verbindungen (3) und (4), 0 bis 12 Gew.-% Komponente (5), 0 bis 15 Gew.-% Komponente (6) eingesetzt, wobei die Summe von (5) und (6) 0,1 bis 27 Gew.-% beträgt und sich die Summe aller Komponenten zu 100 Gew.-% addiert.

Besonders bevorzugt werden 10 bis 40 Gew.-% Komponente (1), 60 bis 85 Gew.-% Komponente (2), 1 bis 25 Gew.-% der Summe von Verbindungen (3) und (4), 0 bis 10 Gew.-% Komponente (5), 0 bis 10 Gew.-% Komponente (6) eingesetzt, wobei die Summe von (5) und (6) 0,1 bis 20 Gew.-% beträgt und sich die Summe aller Komponenten zu 100 Gew.-% addiert.

Ganz besonders bevorzugt werden 15 bis 40 Gew.-% Komponente (1), 60 bis 82 Gew.-% Komponente (2), 1 bis 20 Gew.-% der Summe von Verbindungen (3) und (4), 0 bis 8 Gew.-% Komponente (5), 0 bis 10 Gew.-% Komponente (6) eingesetzt, wobei die Summe von (5) und (6) 0,1 bis 18 Gew.-% beträgt und sich die Summe aller Komponenten zu 100 Gew.-% addiert.

Die Komponente (II) weist bevorzugt eine rein ionische Hydrophilierung entsprechend der Definition der Komponenten (5) auf.

Die vernetzbaren Komponenten (II) können nach den üblichen, im Stand der Technik bekannten Verfahren hergestellt werden. Sie enthalten Carbonsäure- und/oder Sulfonsäuregruppen, bevorzugt Carbonsäuregruppen, die zumindest anteilig neutralisiert sein können, als hydrophile Gruppen. Gut geeignet sind z.B. wasserverdünnbare Polyurethane, die aus folgenden Aufbaukomponenten hergestellt werden:
5 - 50 Gew.%, bevorzugt 8 - 30 Gew.% Polyisocyanate (1),
25 - 90 Gew.%, bevorzugt 30 - 85 Gew.% mindestens eines polymeren Polyoles mit einem zahlenmittleren Molekulargewicht von 200 bis 8000 g/mol (2),
0 - 20 Gew.%, bevorzugt 1 - 15 Gew.% mindestens einer niedermolekularen, zwei oder mehr hydroxyl- und/oder aminogruppenhaltigen Verbindung des Molekulargewichts 62 ― 400 (3),
0 - 10 Gew.%, bevorzugt 0 Gew.% mindestens einer Verbindung (4), die bzgl. der Reaktion mit NCO-Gruppen monofunktionell ist oder aktiven Wasserstoff unterschiedlicher Reaktivität enthält, wobei sich diese Bausteine jeweils am Kettenende des Urethangruppen enthaltenden Polymers befinden,
1 - 10 Gew.%, bevorzugt 2 - 8 Gew.% mindestens einer Verbindung (5), die mindestens zwei gegenüber Isocyanatgruppen reaktive Gruppen und mindestens eine zur Anionenbildung befähigte Gruppe aufweist,
0 - 15 Gew.% isocyanatreaktive, nichtionisch hydrophilierende Verbindungen (6),
wobei die Summe der Komponenten (1) bis (6) 100 % ergibt.

Die Lackbeschichtungsmittel enthalten Komponenten (I), die in Form ihrer wässrigen Dispersionen (I) eingesetzt werden.

Das Verfahren zur Herstellung der wässrigen Dispersionen (I) kann in einer oder mehreren Stufen in homogener oder bei mehrstufiger Umsetzung, teilweise in disperser Phase durchgeführt werden. Nach vollständig oder teilweise durchgeführter Polyaddition aus (1) bis (6) erfolgt ein Dispergier-, Emulgier- oder Lösungsschritt. Im Anschluss erfolgt gegebenenfalls eine weitere Polyaddition oder Modifikation in disperser Phase.

Zur Herstellung der wässrigen PUR-Dispersionen (I) können alle aus dem Stand der Technik bekannten Verfahren wie z. B. Prepolymer-Mischverfahren, Acetonverfahren oder Schmelzdipergierverfahren verwendet werden. Bevorzugt wird die PUR-Dispersion (I) nach dem Aceton-Verfahren hergestellt.

Für die Herstellung der PUR-Dispersion (I) nach dem Aceton-Verfahren werden üblicherweise die Bestandteile (2) bis (6), die keine primären oder sekundären Aminogruppen aufweisen dürfen, und die Polyisocyanatkomponente (1) zur Herstellung eines isocyanatfunktionellen Polyurethan-Prepolymers ganz oder teilweise vorgelegt und gegebenenfalls mit einem mit Wasser mischbaren, aber gegenüber Isocyanatgruppen inerten Lösungsmittel verdünnt und auf Temperaturen im Bereich von 50 bis 120°C aufgeheizt. Zur Beschleunigung der Isocyanatadditionsreaktion können die in der Polyurethan-Chemie bekannten Katalysatoren eingesetzt werden. Bevorzugt ist Dibutylzinndilaurat.

Geeignete Lösungsmittel sind die üblichen aliphatischen, ketofunktionellen Lösemittel wie z.B. Aceton, Butanon, die nicht nur zu Beginn der Herstellung, sondern gegebenenfalls in Teilen auch später zugegeben werden können. Bevorzugt sind Aceton und Butanon.

Anschließend werden die gegebenenfalls zu Beginn der Reaktion noch nicht zugegebenen Bestandteile von (1) bis (6) zudosiert.

Bei der Herstellung des Polyurethan-Prepolymeren beträgt das Stoffmengenverhältnis von Isocyanatgruppen zu mit Isocyanat reaktiven Gruppen 1,0 bis 3,5, bevorzugt 1,1 bis 3,0, besonders bevorzugt 1,1 bis 2,5.

Die Umsetzung der Komponenten (1) bis (6) zum Prepolymer erfolgt teilweise oder vollständig, bevorzugt aber vollständig. Es werden so Polyurethan-Prepolymere, die freie Isocyanatgruppen enthalten, in Substanz oder in Lösung erhalten.

Nach oder während der Herstellung der Polyurethan-Prepolymere erfolgt, falls dies noch nicht in den Ausgangsmolekülen durchgeführt wurde, die teilweise oder vollständige Salzbildung der anionisch und/oder kationisch dispergierend wirkenden Gruppen. Im Falle anionischer Gruppen werden dazu Basen wie tertiäre Amine, z.B. Trialkylamine mit 1 bis 12, bevorzugt 1 bis 6 C-Atomen in jedem Alkylrest eingesetzt. Beispiele hierfür sind Trimethylamin, Triethylamin, Methyldiethylamin, Tripropylamin und Diisopropylethylamin. Die Alkylreste können beispielsweise auch Hydroxylgruppen tragen, wie bei den Dialkylmonoalkanol-, Alkyldialkanol- und Trialkanolaminen. Als Neutralisationsmittel sind gegebenenfalls auch anorganische Basen, wie Ammoniak oder Natrium- bzw. Kaliumhydroxid einsetzbar. Bevorzugt sind Triethylamin, Triethanolamin, Dimethylethanolamin oder Diisopropylethylamin.

Die Stoffmenge der Basen liegt zwischen 50 und 100 %, bevorzugt zwischen 70 und 100 % der Stoffmenge der anionischen Gruppen. Im Falle kationischer Gruppen werden Schwefelsäuredimethylester oder Bernsteinsäure eingesetzt. Werden nur nichtionisch hydrophilierte Verbindungen (6) mit Ethergruppen verwendet, entfällt der Neutralisationsschritt. Die Neutralisation kann auch gleichzeitig mit der Dispergierung erfolgen, in dem das Dispergierwasser bereits das Neutralisationsmittel enthält.

Im Anschluss wird in einem weiteren Verfahrensschritt, falls noch nicht oder nur teilweise geschehen das erhaltene Prepolymer mit Hilfe von aliphatischen Ketonen wie Aceton oder Butanon gelöst.

Anschließend werden mögliche NH₂- und/oder NH-funktionelle Komponenten mit den noch verbliebenen Isocyanatgruppen umgesetzt. Diese Kettenverlängerung/-terminierung kann dabei entweder in Lösungsmittel vor dem Dispergieren, während des Dispergierens oder in Wasser nach dem Dispergieren durchgeführt werden. Bevorzugt wird die Kettenverlängerung vor der Dispergierung in Wasser durchgeführt.

Werden zur Kettenverlängerung Verbindungen entsprechend der Definition von (5) mit NH₂- oder NH-Gruppen eingesetzt, erfolgt die Kettenverlängerung der Prepolymere bevorzugt vor der Dispergierung.

Der Kettenverlängerungsgrad, also das Äquivalentverhältnis von NCO-reaktiven Gruppen der zur Kettenverlängerung eingesetzten Verbindungen zu freien NCO-Gruppen des Prepolymers liegt zwischen 40 bis 150 %, bevorzugt zwischen 70 bis 120 %, besonders bevorzugt zwischen 80 bis 120 %.

Die aminischen Komponenten [(3), (4), (5)] können gegebenenfalls in wasser- oder lösemittelverdünnter Form im Verfahren einzeln oder in Mischungen eingesetzt werden, wobei grundsätzlich jede Reihenfolge der Zugabe möglich ist.

Wenn Wasser oder organische Lösemittel als Verdünnungsmittel mitverwendet werden so beträgt der Verdünnungsmittelgehalt bevorzugt 70 bis 95 Gew.-%.

Die Herstellung der PUR-Dispersion (I) aus den Prepolymeren erfolgt im Anschluss an die Kettenverlängerung. Dazu wird das gelöste und kettenverlängerte Polyurethanpolymer gegebenenfalls unter starker Scherung, wie z.B. starkem Rühren, entweder in das Dispergierwasser eingetragen oder es wird umgekehrt das Dispergierwasser zu den Prepolymerlösungen gerührt. Bevorzugt wird das Wasser in das gelöste Prepolymer gegeben.

Das in den Dispersionen nach dem Dispergierschritt noch enthaltene Lösemittel wird üblicherweise anschließend destillativ entfernt. Eine Entfernung bereits während der Dispergierung ist ebenfalls möglich.

Je nach Neutralisationsgrad und Gehalt ionischer Gruppen kann die Dispersion sehr feinteilig eingestellt werden, so dass sie praktisch das Aussehen einer Lösung hat, aber auch sehr grobteilige Einstellungen sind möglich, die ebenfalls ausreichend stabil sind.

Der Feststoffgehalt der PUR-Dispersion (I) liegt zwischen 25 bis 65 %, bevorzugt 30 bis 60 % und besonders bevorzugt zwischen 40 bis 60 %.

Weiterhin ist es möglich, die wässrigen PUR-Dispersionen (I) durch Polyacrylate zu modifizieren. Hierzu wird in diesen Polyurethan-Dispersionen eine Emulsionspolymerisation von olefmisch ungesättigten Monomeren, z.B. Estern aus (Meth)acrylsäure und Alkoholen mit 1 bis 18 C-Atomen, Styrol, Vinylestern oder Butadien durchgeführt.

Die Beschichtungsmittel enthalten Komponenten (II), die bei der Herstellung entweder in die wässrige Form überführt werden und somit als Dispersion vorliegen oder alternativ auch in einem, mit Wasser mischbaren und gegenüber Isocyanatgruppen inerten Lösungsmittel als Lösung vorliegen.

Die vernetzbaren Komponenten (II) können nach den üblichen, im Stand der Technik bekannten Verfahren hergestellt werden. Sie enthalten Carbonsäure- und/oder Sulfonsäuregruppen, bevorzugt Carbonsäuregruppen, die zumindest anteilig neutralisiert sein können, als hydrophile Gruppen.

Die unter die Komponenten (2) bis (6) fallenden Verbindungen können auch C=C-Doppelbindungen enthalten, die z.B. aus langkettigen aliphatischen Carbonsäuren oder Fettalkoholen stammen können. Eine Funktionalisierung mit olefinischen Doppelbindungen ist beispielsweise auch durch den Einbau allylischer Gruppen oder von Acrylsäure oder Methacrylsäure sowie deren jeweiligen Estern möglich.

Die Herstellung der vernetzbaren Komponenten (II) erfolgt üblicherweise dermaßen, dass zunächst ein isocyanatfunktionelles Prepolymer aus Verbindungen entsprechend der Definition den Komponenten (1) bis (6) hergestellt wird und in einem zweiten Reaktionsschritt durch Reaktion mit Verbindungen entsprechend der Definition der Komponenten (3), (4) und (5), in nicht-wässrigem Medium ein OH- und/oder NH-funktionelles Polyurethan erhalten wird, wie z.B. in der EP-A 0 355 682 , S. 4, Z. 39 - 45 beschrieben. Die Herstellung kann aber auch so erfolgen, dass das OH-und/oder NH-Gruppen enthaltende Polyurethanharz direkt durch Umsetzung der Komponenten (1) bis (6) in nicht-wässrigem Medium gebildet wird, wie z.B. in der EP-A 0 427 028, S.4, Z. 54 - S. 5, Z.1 beschrieben.

Die zum Aufbau dieses Prepolymers eingesetzten Verbindungen entsprechend der Definition der Komponente (2) kann, muss aber nicht zwingend, zuvor einem Destillationsschritt unter vermindertem Druck unterzogen werden. Dazu werden diese Verbindungen bevorzugt kontinuierlich in einem Dünnschichtverdampfer bei Temperaturen ≥150 °C, bevorzugt bei 170 bis 230°C, besonders bevorzugt bei 180 bis 220 °C, unter einem vermindertem Druck von < 10 mbar, bevorzugt ≤ 2 mbar, besonders bevorzugt ≤ 0,5 mbar destilliert. Niedermolekulare, nichtreaktive flüchtige Anteile werden unter diesen Bedingungen abgetrennt. Bei der Destillation werden flüchtige Anteile von 0,2 bis 15 Gew.-%, bevorzugt 0,5 bis 10 Gew.-%, besonders bevorzugt 1 bis 6 Gew.-% abgetrennt.

Die Prepolymer-Herstellung wird normalerweise bei Temperaturen von 0° bis 140°C, je nach Reaktivität des eingesetzten Isocyanats, durchgeführt. Die Komponenten (1) und (2) werden bevorzugt so eingesetzt, dass sich ein NCO/OH-Verhältnis von 0,5 bis 0,99/ 1, bevorzugt 0,55 bis 0,95/ 1 und besonders bevorzugt von 0,57 bis 0,9/ 1 ergibt.

Zur Beschleunigung der Urethanisierungsreaktion können geeignete Katalysatoren, wie sie zur Beschleunigung der NCO/OH-Reaktion dem Fachmann bekannt sind, eingesetzt werden. Beispiele hierfür sind tertiäre Amine wie Triethylamin oder Diazobicyclooctan, Organozinnverbindungen wie z.B. Dibutylzinnoxid, Dibutylzinndilaurat oder Zinn-bis(2-ethylhexanoat) oder andere metallorganische Verbindungen.

Die Prepolymer-Herstellung wird bevorzugt in Gegenwart von gegenüber Isocyanat-Gruppen inerten Lösemitteln durchgeführt. Hierfür kommen insbesondere solche Lösemittel in Betracht, die mit Wasser verträglich sind, wie Ether, Ketone und Ester sowie N-Methylpyrrolidon. Die Menge dieses Lösungsmittels überschreitet zweckmäßigerweise nicht 30 Gew.-% und liegt bevorzugt im Bereich von 10 bis 25 Gew.-%, jeweils bezogen auf die Summe aus Polyurethanharz und Lösemittel.

Die im so erhältlichen Prepolymer eingebauten Säuregruppen werden zumindest anteilig neutralisiert. Dies kann während oder auch nach der Prepolymerherstellung aber auch während oder nach der Dispergierung in Wasser durch Zugabe geeigneter Neutralisationsmittel (siehe auch bei PUR-Dispersion (I)) erfolgen. Beispiel hierfür ist Dimethylethanolamin, das bevorzugt als Neutralisationsmittel dient. Das Neutralisationsmittel wird zumeist im Molverhältnis zu den Säuregruppen des Prepolymers von 0,3:1 bis 1,3:1, bevorzugt von 0,4:1 bis 1:1 eingesetzt.

Bevorzugt wird der Neutralisationsschritt im Anschluss an die Prepolymerherstellung durchgeführt, wobei grundsätzlich bei Temperaturen von 0 bis 80°C, bevorzugt 40 bis 80°C gearbeitet wird.

Anschließend wird das hydroxy- und/oder aminofunktionelle Polyurethan durch Zugabe von Wasser oder durch Eintragen in Wasser in eine wässrige Dispersion überführt.

Die Harze der nach der vorhergehend beschriebenen Vorgehensweise erhältlichen PUR-Polymere (II) besitzen ein zahlenmittleres Molekulargewicht Mₙ von 1 000 bis 30 000, bevorzugt von 1 500 bis 10 000, eine Säurezahl von 10 bis 80, bevorzugt von 15 bis 40 mg KOH/g und einen OH-Gehalt von 0,5 bis 6 Gew.-%, bevorzugt von 1,0 bis 4 Gew.-%.

Die PUR-Dispersionen (I) und (II) können als weitere Komponente (7) Antioxidantien und/oder Lichtschutzmittel und/oder andere Hilfs- und Zusatzmittel enthalten.

Als Lichtschutzmittel und Antioxidantien (7) können gegebenenfalls alle für Polyurethane bzw. Polyurethandispersionen bekannten und beispielsweise in "Lichtschutzmittel für Lacke" (A. Valet, Vincentz Verlag, Hannover, 1996) und "Stabilization of Polymeric Materials" (H. Zweifel, Springer Verlag, Berlin, 1997) beschriebenen Additive verwendet werden. Darüber hinaus können alle für PUR-Dispersionen bekannte Hilfs- und Zusatzmittel, wie beispielsweise Emulgatoren, Entschäumer, Verdicker, in den PUR-Dispersionen enthalten sein. Schließlich können auch Füllstoffe, Weichmacher, Pigmente, Ruß- und Kieselsäuresole, Aluminium-, Ton-, Asbest-Dispersionen in die PUR-Dispersionen eingearbeitet werden.

In den Beschichtungsmitteln sind auch Vernetzer (III) enthalten. Je nach Wahl des Vernetzer können sowohl Einkomponentenlacke als auch Zweikomponentenlacke hergestellt werden. Unter Einkomponentenlacken im Sinne der vorliegenden Erfindung sind dabei Überzugsmittel zu verstehen, bei denen Bindemittelkomponente und Vernetzerkomponente zusammen gelagert werden können, ohne dass eine Vernetzungsreaktion in merklichen bzw. für die spätere Applikation schädlichen Ausmaß stattfindet. Die Vernetzungsreaktion findet erst bei Applikation nach einer Aktivierung des Vernetzers statt. Diese Aktivierung kann z.B. durch Temperatursteigerung bewirkt werden. Unter Zweikomponentenlacken im Sinne der vorliegenden Erfindung versteht man Überzugsmittel, bei denen Bindemittelkomponente und Vernetzerkomponente aufgrund ihrer hohen Reaktivität in getrennten Gefäßen gelagert werden müssen. Die beiden Komponenten werden erst kurz vor Applikation gemischt und reagieren dann im Allgemeinen ohne zusätzliche Aktivierung. Zur Beschleunigung der Vernetzungsreaktion können aber auch Katalysatoren eingesetzt oder höhere Temperaturen angewendet werden.

Geeignete Vernetzer (III) sind beispielsweise blockierte oder unblockierte Polyisocyanat-Vernetzer, Amid- und Amin-Formaldehydharze, Phenolharze, Aldehyd- und Ketonharze, wie z.B. Phenol-Formaldehydharze, Resole, Furanharze, Harnstoffharze, Carbamidsäureesterharze, Triazinharze, Melaminharze, Benzoguanaminharze, Cyanamidharze, Anilinharze, wie sie in "Lackkunstharze", H. Wagner, H.F. Sarx, Carl Hanser Verlag München, 1971, beschrieben sind. Bevorzugt sind Polyisocyanate.

Besonders bevorzugt werden als Vernetzungskomponente (III) Polyisocyanate mit freien Isocyanat-Gruppen eingesetzt, da die erhaltenen wässrigen Polyurethanlacke ein besonders hohes lacktechnische Niveau zeigen. Geeignete Vernetzer (III) sind beispielsweise 1-Isocyanato-3,3,5-trimethyl-5-isocyanatomethyl-cyclohexan, Hexamethylendiisocyanat, 1,4-Diisocyanatocyclohexan oder Bis-(4-isocyanatocyclohexan)-methan oder 1,3-(Bis-2-isocyanatopropyl-2)-benzol oder auf Basis von Lackpolyisocyanaten wie Uretdion-, Biuret-, Isocyanurat- oder Iminooxadiazindiongruppen aufweisenden Polyisocyanaten von Hexamethylendiisocyanat, 1-Isocyanato-3,3,5-trimethyl-5-isocyanatomethyl-cyclohexan oder Bis-(4-isocyanatocyclohexan)-methan oder Urethangruppen aufweisenden Lackpolyisocyanaten auf Basis von 2,4- und/oder 2,6-Diisocyanatotoluol oder 1-Isocyanato-3,3,5-trimethyl-5-isocyanatomethyl-cyclohexan einerseits und niedermolekularen Polyhydroxylverbindungen wie Trimethylolpropan, den isomeren Propandiolen oder Butandiolen oder beliebigen Gemischen derartiger Polyhydroxylverbindungen andererseits.

Ebenfalls kann ein Zweikomponenten-Lack eingesetzt werden.

Gegebenenfalls können die genannten, freie Isocyanatgruppen enthaltenden Verbindungen durch Umsetzung mit sogenannten Blockierungsmitteln in weniger reaktive Derivate überführt werden, welche dann erst nach Aktivierung beispielsweise bei höheren Temperaturen reagieren. Geeignete Blockierungsmittel für diese Polyisocyanate sind beispielsweise einwertige Alkohole wie Methanol, Ethanol, Butanol, Hexanol, Cyclohexanol, Benzylalkohol, Oxime wie Acetoxim, Methylethylketoxim, Cyclohexanonoxim, Lactame wie ε-Caprolactam, Phenole, Amine wie Diisopropylamin oder Dibutylamin, Dimethylpyrazol oder Triazol sowie Malonsäuredimethylester, Malonsäurediethylester oder Malonsäuredibutylester.

Ganz besonders bevorzugt ist der Einsatz niedrigviskoser, hydrophober oder hydrophilierter Polyisocyanate der vorstehend genannten Art mit freien Isocyanatgruppen auf Basis aliphatischer, cycloaliphatischer, araliphatischer und/oder aromatischer Isocyanate, bevorzugt aliphatischer oder cycloaliphatischer Isocyanate, da sich so ein besonders hohes Beständigkeitsniveau des Lackfilms erreichen lässt. Diese Polyisocyanate weisen bei 23°C im Allgemeinen eine Viskosität von 10 bis 3 500 mPas auf.

Falls erforderlich, können die Polyisocyanate in Abmischung mit geringen Mengen an inerten Lösemitteln zum Einsatz gelangen, um die Viskosität auf einen Wert innerhalb des genannten Bereiches abzusenken. Auch Triisocyanatononan kann allein oder in Mischungen in Komponente (III) eingesetzt werden.

Die hier beschriebenen Komponenten (I) und (II) sind im Allgemeinen ausreichend hydrophil, so dass die Dispergierbarkeit auch hydrophober Vernetzer als Komponente (III) gewährleistet ist. Falls gewünscht können aber auch zusätzliche externe Emulgatoren, wie sie dem Fachmann bekannt sind, zugesetzt werden.

Es können aber auch wasserlösliche bzw. dispergierbare Polyisocyanate, wie sie z.B. durch Modifikation mit Carboxylat-, Sulfonat- und/oder Polyethylenoxidgruppen und/oder Polyethylenoxid/Polypropylenoxidgruppen erhältlich sind, als Komponente (III) eingesetzt werden.

Prinzipiell möglich ist natürlich auch der Einsatz von Mischungen verschiedener Vernetzer der vorstehend genannten Art in der Komponente (III).

Als weitere filmbildende Harze der Komponente (IV) sind in Wasser dispergierbare, emulgierbare oder lösliche Polymere geeignet, die sich von den Bestandteilen der Komponenten (I) bis (III) unterscheiden. Beispiele hierfür sind gegebenenfalls epoxidgruppenhaltige Polyester, Polyurethane, Acrylpolymere, Vinylpolymere wie Polyvinylacetat, Polyurethandispersionen, Polyacrylatdispersionen, Polyurethan-Polyacrylat-Hybriddispersionen, Polyvinylether- bzw. Polyvinylesterdispersionen, Polystyrol- bzw. Polyacrylnitrildispersionen. Der Feststoffgehalt der filmbildenden Harze der Komponente (IV) beträgt bevorzugt 10 bis 100 Gew.-%, besonders bevorzugt 30 bis 100 Gew.-%.

Die PUR-Polymere (I) sowie die PUR-Polymere (II) werden in Wasser dispergiert und mit dem Vernetzer (III) sowie gegebenenfalls mit den filmbildenen Harzen (IV) vermischt.

Ebenfalls ist es möglich, dass die PUR-Polymere (II) als Lösung in einem mit Wasser mischbaren und gegenüber Isocyanatgruppen inerten Lösungsmittel vorliegen und durch Eintragen in die PUR-Dispersion (I) in die wässrige Phase überführt und anschließend mit dem Vernetzer (III) und gegebenenfalls mit den filmbildenen Harzen (IV) vermischt werden.

Das Verhältnis des Vernetzers (III) zu den mit ihm reaktiven Verbindungen der Komponenten (II) und gegebenenfalls (IV) ist so zu wählen, dass ein Verhältnis von gegenüber dem Vernetzer reaktiven Gruppen aus (II) und (IV) (z.B. OH-Gruppen) zu den reaktiven Gruppen des Vernetzers (bei Isocyanaten NCO-Gruppen) von 0,5 : 1,0 bis 3,5 : 1,0, bevorzugt 1,0 : 1,0 bis 3,0 : 1,0 und besonders bevorzugt von 1,0 : 1,0 bis 2,5 : 1,0 resultiert.

Die Mischung der Komponenten (I), (II) und (IV) enthält bevorzugt 5 bis 95 Gew.-%, besonders bevorzugt 25 bis 75 Gew.-% der Komponente (II), wobei die Mengen von (I) und (IV) so zu wählen sind, dass die Gesamtmengen von (I), (II) und (IV) sich zu 100 Gew.-% aufaddieren.

Als lackübliche Hilfs- und Zusatzmittel können in den Lackbeschichtungsmitteln die dem Fachmann bekannten Stoffe wie Entschäumungsmittel, Verdickungsmittel, Pigmente, Dispergierhilfsmittel, Mattierungsmittel, Katalysatoren, Hautverhinderungsmittel, Antiabsetzmittel und/oder Emulgatoren, sowie Additive, die den gewünschten Softfeel-Effekt verstärken, enthalten sein. Dabei ist es unerheblich zu welchem Zeitpunkt der Herstellung diese den Beschichtungsmitteln zugesetzt oder in diese eingearbeitet werden.

Die Aushärtung erfolgt üblicherweise bei Temperaturen zwischen Raumtemperatur und 130°C. Die Zweikomponenten-Technologie mit nicht-blockierten Polyisocyanaten als Vernetzer erlaubt dabei die Verwendung vergleichsweise niedriger Aushärtetemperaturen in o.g. Intervall.

Die Herstellung der Beschichtung auf der Trägerfolie kann nach den unterschiedlichen Spritzverfahren, wie beispielsweise Luftdruck-, Airless- oder Elektrostatik-Spritzverfahren unter Verwendung von Ein- oder gegebenenfalls Zweikomponenten-Spritzanlagen erfolgen. Die Lackbeschichtungsmittel können jedoch auch nach anderen Methoden, beispielsweise durch Streichen, Rollen, Tauchen oder Rakeln appliziert werden.

Um Teilbereiche auf der Folie zu beschichten, wird z.B. Siebdruck bevorzugt eingesetzt. Die Schichtdicken können zwischen 2 Mikrometer und 100 Mikrometer sein, bevorzugt zwischen 5 und 75 µm, besonders bevorzugt zwischen 5 und 50 µm.

Für die Herstellung der Verbundfolien können als Trägerschicht übliche Kunststofffolien, z.B aus PET, Polycarbonat, PMMA, Polysulfon etc. eingesetzt werden. Die Folien können gegebenenfalls durch Verfahren wie Coronabehandlung etc. vorbehandelt werden. Die Folien weisen bevorzugt Dicken zwischen 2 und 2.000 Mikrometer auf. Bevorzugt werden Trägerschichten aus Polycarbonat und Polycarbonat-Blends verwendet. Bei den Trägerfolien kann es sich auch um sogenannte Verbundfolien aus mehreren Kunststoffschichten handeln.

Als geeignete Trägerfolie sind prinzipiell alle an sich bekannten oder kommerziell erhältlichen Polycarbonate geeignet. Die als Trägerfolie geeigneten Polycarbonate haben vorzugsweise ein Molekulargewicht im Bereich von 10.000 bis 60.000 g/mol. Sie sind z.B. entsprechend den Verfahren der DE-B-1 300 266 durch Grenzflächenpolykondensation oder gemäß dem Verfahren der DE-A-1 495 730 durch Umsetzung von Diphenylcarbonat mit Bisphenolen erhältlich. Bevorzugtes Bisphenol ist 2,2-Di(4-hydroxyphenyl)propan, im allgemeinen - wie auch im folgenden - als Bisphenol A bezeichnet.

Anstelle von Bisphenol A können auch andere aromatische Dihydroxyverbindungen verwendet werden, insbesondere 2,2-Di(4-hydroxyphenyl)pentan, 1,6-Dihydroxynaphthalin, 4,4'-Dihydroxydiphenylsulfan, 4,4'-Dihydroxydiphenylether, 4,4'-Dihydroxydiphenylsulfon, 4,4'-Dihydroxydiphenylmethan, 1,1-Di(4-hydroxyphenyl)ethan, 4,4'Dihydroxydiphenyl- oder Dihydroxydiphenylcycloalkane, bevorzugt Dihydroxydiphenylcyclohexane oder Dihydroxycyclopentane sowie Mischungen der vorgenannten Dihydroxyverbindungen.

Besonders gut als Trägerfolie geeignete Polycarbonate sind solche, die Einheiten enthalten, welche sich von Resorcinol- oder Alkylresorcinolestern ableiten, wie sie beispielsweise in WO 00/15718 oder WO 00/26274 beschrieben werden; solche Polycarbonate werden beispielsweise von General Electric Company unter der Marke Sollx® vertrieben.

Neben diesen Trägerfolien können auch Blends oder Mischungen von Kunststoffen eingesetzt werden. Besonders vorteilhaft haben sich Blends aus Polycarbonat und Polyestern, z.B. Polybutylenterephthalat oder Polyethylenterephthalat, und Polyestern aus Cyclohexandicarbonsäure und Cyclohexandimethanol erwiesen. Solche Produkte werden unter den Bezeichnungen Bayfol® von Bayer MaterialScience AG oder Xylex® von General Electric Company vertrieben.

Es können auch Copolycarbonate gemäß der US-A 3 737 409 verwendet werden; von besonderem Interesse sind dabei Copolycarbonate auf der Basis von Bispehnol A und Di-(3,5-dimethyl-dihydroxyphenyl)sulfon, die sich durch eine hohe Wäremformbeständigkeit auszeichnen. Ferner ist es möglich, Mischungen unterschiedlicher Polycarbonate einzusetzen.

Schlagzähes PMMA ist ein Polymethylmethacrylat, das durch geeignete Zusätze schlagzäh ausgerüstet ist und vorzugsweise eingesetzt wird. Geeignete schlagzähmodifizierte PMMA sind beispielsweise beschrieben von M. Stickler, T. Rhein in Ullmann's Encyclopedia of Industrial Chemistry Vol. A 21, Seiten 473-486, VCH Publishers Weinheim, 1992, und H. Domininghaus, Die Kunststoffe und ihre Eigenschaften, VDI-Verlag Düsseldorf, 1992.

Für die Herstellung der Trägerfolie kommen alle bekannten Verfahren, beispielsweise durch Adapter-oder Co-Extrusion oder Auseinanderkaschieren von Schichten in Frage. Darüber hinaus kann die Trägerfolie auch aus Lösung gegossen werden.

Die Oberfläche der Trägerfolie kann glänzend, strukturiert oder mattiert sein.

Als Hinterspritz-, Hintergieß- oder Hinterpresskunststoffe kommen alle bekannten thermoplastischen polymeren Materialien in Frage. Geeignet sind z.B. thermoplastische Polymere wie Polyolefine, z.B. Polyethylen oder Polypropylen, Polyester, z.B. Polybutylenterephthalat (PBT) und Polyethylenterephthalat (PET), Polycycloolefine, Poly(meth)acrylate, Polyamide, Polycarbonate, Polyurethane, Polyacetale, z.B. Polyoxymethylen (POM), Polystyrole, Polyphenylenether, Polysulfone, Polyethersulfone, Polyetherketone, Styrol(co)polymere oder Mischungen der vorgenannten Polymere.

Besonders geeignete Polycarbonate sind Bisphenol-A- und TMC-Bisphenol-Polycarbonate. Bevorzugte Polymermischungen enthalten Polycarbonat und Polybutylenterephthalat oder Polycarbonat und ABS-Polymerisat.

Aufgrund der sehr guten Verformungseigenschaften und der guten Haftung sowie des guten Verstreckungsverhaltens der Soft-Touch Schicht in der Verbundfolie können nicht nur ebenförmige, d.h. im wesentlichen flächige, oder schalenförmige Formteile, sondern auch solche mit Einbuchtungen und Ausformungen, auch senkrechten Ausformungen oder Vertiefungen, wie z.B. Handytastaturen, hergestellt werden. Die guten, mit den Verbundfolien einhergehenden Oberflächeneigenschaften sind somit auch bei Verbundformteilen mit anspruchsvoller Geometrie zugänglich.

Die erfindungsgemäßen Verbundformteile werden in Telekommunikationsgeräten, im Fahrzeug-, Schiff- und Flugzeugbau verwendet.

Die Erfindung soll anhand der nachfolgenden Beispiele näher erläutert werden.

### Beispiele

### Eingesetzte Folien:

Bayfol^{®} CR 6-2: 375 µm dicke Extrusionsfolie der Bayer MaterialScience AG aus einem Polycarbonat-Blend

### Eingesetzte Materialien für den Soft-Touch-Lack:

### Komponente I:

### Bayhydrol^{®} PR 240:

Hydroxygruppenfreie, aliphatische, anionisch hydrophilierte PUR-Dispersion mit einem Festkörpergehalt von 40 % und einer mittleren Teilchengröße von 100-300 nm von Bayer MaterialScience AG, Leverkusen, DE.

### Bayhydrol^{®} XP 2419:

Hydroxygruppenfreie, aliphatische, anionisch hydrophilierte PUR-Dispersion mit einem Festkörpergehalt von 50 % von Bayer MaterialScience AG, Leverkusen, DE.

### Komponente II:

### Bayhydrol^{®} XP 2429:

Aliphatische, hydroxyfunktionelle Polyesterpolyurethan-Dispersion mit einem Festkörpergehalt von 55 %, OH-Gehalt ca. 0,8 % von Bayer MaterialScience AG, Leverkusen, DE.

### Bayhydrol^{®} VP LS 2058:

Wässrige, hydroxyfunktionelle Polyacrylat-Dispersion mit einem Festkörpergehalt von ca. 42 %, OH-Gehalt ca. 2 % von Bayer MaterialScience AG, Leverkusen, DE.

### Bayhydrol^{®} A 145:

Wasserverdünnbare, OH-funktionelle Polyacrylatdispersion mit ca. 45 % Festkörpergehalt, OH-Gehalt bezogen auf Festharz ca. 3,3 % von Bayer MaterialScience AG, Leverkusen, DE

### Bayhydrol^{®} PT 241

Hydroxyfunktionelle Polyester-Polyurethan Dispersion mit einem Festkörpergehalt von ca. 41 %, OH-Gehalt bezogen auf Festharz ca. 2,5 % von Bayer MaterialScience AG, Leverkusen, DE.

### Komponente III:

### Bayhydur^{®} 3100:

Hydrophiles, aliphatisches Polyisocyanat auf Basis Hexamethylendiisocyanat (HDI) mit einem Isocyanatgehalt von 17,4 % von Bayer MaterialScience AG, Leverkusen, DE

### Additive:

- BYK 348:: Benetzungsmittel (BYK-Chemie, Wesel, DE)
- Tego-Wet KL 245:: Verlaufsadditiv, 50 %ig in Wasser (Tegochemie, Essen, DE)
- Aquacer 535:: Wachsemulsion (BYK-Chemie, Wesel, DE)
- Entschäumer DNE:: Entschäumer (K. Obermayer, Bad Berleburg, DE)
- Sillitin Z 86:: Füllstoff (Hoffmann & Söhne, Neuburg, DE)
- Pergopak M 3:: Füllstoff, Mattierungsmittel (Martinswerk, Bergheim, DE)
- Talkum IT extra:: Mattierungsmittel (Norwegian Talc, Frankfurt, DE)
- Bayferrox^{®} 318 M:: Farbpigment (schwarz) (Bayer AG, Leverkusen, DE)
- OK 412:: Mattierungsmittel (Degussa, Frankfurt, DE)
- MPA:: 1-Methoxy-2-propylacetat

**Tabelle 1: Eingesetzte Beschichtungsmittelzusammensetzungen der Beispiele 1 bis 7 (Beispiel 1 und 2: erfindungsgemäße Soft-Touch Lacke, Beispiele 3 bis 6: Vergleichsbeispiele); Klarlacksysteme**

| **Beispiel** | **1** | **2** | **3** | **4** | **5** | **6** |
|---|---|---|---|---|---|---|
| **Komponente I:** | | | | | | |
| Bayhydrol^{®} PR 240 | 38,2 | - | - | - | - | - |
| Bayhydrol^{®} XP 2419 | - | 33,5 | - | - | - | - |

| **Komponente II:** | | | | | | |
|---|---|---|---|---|---|---|
| Bayhydrol^{®} XP 2429 | 28,2 | 30,6 | 53,8 | - | - | - |
| Bayhydrol^{®} VP LS 2058 | - | - | - | 46,6 | - | - |
| Bayhydrol^{®} A 145 | - | - | - | - | 51,3 | - |
| Bayhydrol^{®} PT 241 | - | - | - | - | - | 58,1 |
| | | | | | | |
| Wasser, Demineralisiert | 14,2 | 15,3 | 19,5 | 12,2 | 13,0 | 11,4 |
| Entschäumer DNE | 0,2 | 0,2 | 0,2 | 0,2 | 0,2 | 0,2 |
| Byk 348 | 0,5 | 0,6 | 0,6 | 0,6 | 0,6 | 0,6 |
| Tegowet KL 245 | 0,3 | 0,4 | 0,4 | 0,4 | 0,4 | 0,4 |
| Aquacer 535 | 1,4 | 1,5 | 1,7 | 1,7 | 1,6 | 1,6 |
| Sillitin Z 86 | 3,3 | 3,6 | 3,9 | 3,9 | 3,7 | 3,6 |
| Pergopak M3 | 5,0 | 5,4 | 5,8 | 5,9 | 5,5 | 5,5 |
| OK 412 | 1,7 | 1,8 | 1,9 | 2,0 | 1,8 | 1,8 |

| **Komponente III:** | | | | | | |
|---|---|---|---|---|---|---|
| Härter: Bayhydur^{®} 3100 75% MPA | 6,4 | 6,9 | 12,2 | 26,5 | 21,9 | 16,8 |
| **Summe** | **100,0** | **100,0** | **100,0** | **100,0** | **100,0** | **100,0** |
| NCO/OH-Verhältnis | 1,5 | 1,5 | 1,5 | 1,5 | 1,5 | 1,5 |
| Festkörper-Gehalt | ~50 | ~50 | ~50 | ~50 | ~50 | ~50 |
| Applikationsparameter | Luftdruck: 3 bar; Düsengröße: 1,4; Trocknung: 10' RT + 30' 80°C + 16 h 60°C | | | | | |

Alle Mengenangaben sind in Gewichtsprozent.

Die Herstellung des sogenannten Stammlackes (Komponenten (I) und (II) sowie die Additive) erfolgte nach Vordispergierung durch Anreibung über einen Laborschüttler. Die Temperatur der Dispersion sollte 40°C nicht überschreiten. Anschließend wurde OK 412 ca. 10 min. eingerührt. Nach Vernetzung wurde das Lacksystem auf ca. 30 s Auslaufzeit (Zugabe von Wasser; DIN ISO 2431, 5mm Düse) eingestellt, konventionell einschichtig auf die raue Seite der Folie Bayfol® CR 6-2 verspritzt und unter folgenden Trocknungsbedingungen getrocknet: 10 min. bei RT ablüften; 30 min. bei 80 °C und 16 h bei 60 °C (Alterung).

Die Lackschichtdicke liegt zwischen 30 und 40 µm.

Anschließend wurden die mit Lack beschichteten Folien auf verschiedene Eigenschaften geprüft. Die Ergebnisse sind in den folgenden Tabellen 2 und 3 dargestellt.

**Tabelle 2: Prüfergebnisse der mit den Lacken 1-6 beschichteten Bayfol^{®} CR 6-2 Folien**

| **Beispiel** | **Optischer Eindruck und Haptik ¹** | **Glanz 60°** ² | **Lösemittelbeständigkeit (1min statisch) ³** in EtAc / MPA / X EtOH / SB / H₂O | **Crockmetertest ⁴** - / + Ethanol Hübe dynamisch |
|---|---|---|---|---|
| **1 (erf.)** | einwandfrei 1 | 3,2 | 4 / 2 / 1 2 / 1 / 0 | > 100 / 20 |
| **2 (erf.)** | einwandfrei 2 | 3,2 | 4 / 2 / 1 2 / 1 / 0 | > 100 / 15 |
| **3 (Vgl.)** | einwandfrei 2-3 | 1,2 | 4 / 2 / 1 2 / 1 / 0 | > 100 / 20 |
| **4(Vgl.)** | einwandfrei 5 | 1,3 | 1 / 1 / 1 0 / 1 / 0 | > 100 / 20 |
| **5(Vgl.)** | einwandfrei 5 | 2,6 | 1 / 1 / 1 0 / 1 / 0 | > 100 / 100 |
| **6 (Vgl.)** | einwandfrei 5 | 0,9 | 1 / 1 / 1 0 / 1 / 0 | > 100 / 20 |

| | | | | |
|---|---|---|---|---|
| EtAc = Ethylacetat, MPA = 1-Methoxy-2-propylacetat, X = Xylol, EtOH = Ethanol, SB = Super Benzin | | | | |

### Tiefziehfähigkeit mittels Hochdruckverformung

Die gemäß der Beispiele 1 bis 6 beschichteten Bayfol^{®} 6-2-Folien wurden gemäß DE-A 38 40 542 verformt. Die Versuche wurden auf einer Hochdruckverformungsanlage der Fa. HDVF Kunststoffmaschinen GmbH, Typ SAMK 360 durchgeführt. Als Verformwerkzeug wurde für die Hinterspritzversuche eine Heizungslüftungsblende verwendet. Die Verformungsparameter wurden wie folgt gewählt: Heizrate 13 sec, Heizfeldereinstellung 240°C-280°C, Werkzeugtemperatur 100°C, Verformungsdruck 120 bar. Die verformten Folien werden entsprechend der Form ausgestanzt. Visuell wurde die Haftung, die Rissbildung und Weißverfärbung der Beschichtungen nach der Verformung beurteilt.

**Tabelle 3: Prüfergebnisse der mit den Lacken 1-6 beschichteten Bayfol^{®} CR 6-2 Folien**

| **Beispiel** | **Pendelhärte ⁵ [s]** | **Tiefziehverhalten ⁶ bei 12s Heizrate Werkzeug: 2 Blenden** |
|---|---|---|
| **1 (erf.)** | 43 | 0-1 |
| **2 (erf.)** | 28 | 0-1 |
| **3 (Vgl.)** | 48 | 3 |
| **4 (Vgl.)** | 39 | 5 |
| **5 (Vgl.)** | 74 | 5 |
| **6 (Vgl.)** | 20 | 5 |

| | | |
|---|---|---|
| ¹ Haptik; Zahlenwert: 0 (sehr gut), 1 (gut), 2 (befriedigend), 3 und 4 (nicht mehr ausreichend), 5 (schlecht) ² Glanz ³ Beauschlagung mit einem Wattebausch (1min bei RT): 0 (keine Schädigung) ― 5 (Lack zerstört) ⁴ Crockmeter Atlas CM6: Anzahl der Hübe bis eine Verfärbung des verwendeten Leinentuchs sichtbar ist; - = trockenes Tuch, + = mit Ethanol getränktes Tuch ⁵ Pendelhärte nach König gemäß DIN EN ISO 1522 ⁶ Zahlenwert: 0 (sehr gut), 1 (gut), 2 (befriedigend), 3 und 4 (nicht mehr ausreichend), 5 (schlecht) 0 (keine Rissbildung) 1 (geringfügige Rissbildung) 2 (Rissbildung) 3 (stärkere Rissbildung) 4 (starke Rissbildung) 5 (sehr starke Rissbildung über Großteil der Fläche) | | |

Die in den Tabellen 2 und 3 aufgeführten Ergebnisse belegen, dass nur mit den erfindungsgemäß eingesetzten Soft-Touch-Klarlacken (Beispiele 1 und 2) sehr gute Tiefziehfähigkeiten der beschichteten Folie erhalten werden können.

**Tabelle 4: Eingesetzte Beschichtungsmittelzusammensetzungen der Beispiele 7 bis 12 (Beispiel 7 und 8: erfindungsgemäße Soft-Touch Lacke, Beispiele 9 bis 12: Vergleichsbeispiele); pigmentierte Einschichtdecklacksysteme (schwarz)**

| **Beispiel** | **7** | **8** | **9** | **10** | **11** | **12** |
|---|---|---|---|---|---|---|
| **Komponente I:** | | | | | | |
| Bayhydrol^{®} PR 240 | 28,3 | - | - | - | - | - |
| Bayhydrol^{®} XP 2419 | - | 27,5 | - | - | - | - |

| **Komponente II:** | | | | | | |
|---|---|---|---|---|---|---|
| Bayhydrol^{®} XP 2429 | 20,6 | 25,0 | 37,8 | - | - | - |
| Bayhydrol^{®} VP LS 2058 | - | - | - | 33,3 | - | - |
| Bayhydrol^{®} VP A 145 | - | - | - | - | 38,8 | - |
| Bayhydrol^{®} PT 241 | - | - | - | - | - | 45,0 |
| | | | | | | |
| Wasser, Demineralisiert | 26,5 | 17,5 | 31,0 | 24,6 | 21,6 | 18,8 |
| Entschäumer DNE | 0,2 | 0,2 | 0,2 | 0,2 | 0,2 | 0,2 |
| Byk 348 | 0,4 | 0,5 | 0,4 | 0,4 | 0,4 | 0,4 |
| Tegowet KL 245 | 0,3 | 0,3 | 0,3 | 0,3 | 0,3 | 0,3 |
| Aquacer 535 | 1,0 | 1,3 | 1,2 | 1,2 | 1,2 | 1,2 |
| Sillitin Z 86 | 2,4 | 2,9 | 2,7 | 2,8 | 2,8 | 2,8 |
| Pergopak M3 | 3,6 | 4,4 | 4,1 | 4,2 | 4,2 | 4,2 |
| Talkum IT extra | 1,2 | 1,5 | 1,4 | 1,4 | 1,4 | 1,4 |
| Bayferrox^{®} 318 M | 9,6 | 11,7 | 10,9 | 11,3 | 11,2 | 11,3 |
| OK 412 | 1,2 | 1,5 | 1,4 | 1,4 | 1,4 | 1,4 |

| **Komponente III:** | | | | | | |
|---|---|---|---|---|---|---|
| Härter: Bayhydur^{®} 3100 75% MPA | 4,7 | 5,7 | 8,6 | 18,9 | 16,5 | 13,0 |
| **Summe** | **100,0** | **100,0** | **100,0** | **100,0** | **100,0** | **100,0** |
| NCO/OH-Verhältnis | 1,5 | 1,5 | 1,5 | 1,5 | 1,5 | 1,5 |
| Festkörper-Gehalt | ~55 | ~55 | ~55 | ~55 | ~55 | ~55 |
| Applikation | Luftdruck: 3 bar; Düsengröße: 1,4; Trocknung: 10' RT + 30' 80°C + 16 h 60°C | | | | | |

Alle Mengenangaben sind in Gewichtsprozent.

Die Herstellung des sogenannten Stammlackes erfolgte nach Vordispergierung durch Anreibung über einen Laborschüttler. Die Temperatur der Dispersion sollte 40°C nicht überschreiten. Anschließend wurde OK 412 ca. 10 min. eingerührt. Nach Vernetzung wurde das Lacksystem auf ca. 30 s Auslaufzeit durch Zugabe von Wasser (DIN ISO 2431, 5mm Düse) eingestellt, konventionell einschichtig auf die raue Seite der Folie Bayfol^{®} CR 6-2 verspritzt und unter folgenden Trocknungsbedingungen getrocknet: 10 min. bei RT ablüften; 30 min. bei 80°C und 16 h bei 60°C (Alterung).

Die Lackschichtdicke beträgt zwischen 30 und 40 µm.

Anschließend wurden die mit Lack beschichteten Folien auf verschiedene Eigenschaften geprüft. Die Ergebnisse sind in den folgenden Tabellen 5 und 6 dargestellt.

**Tabelle 5: Prüfergebnisse der mit den Lacken 7-12 beschichteten Bayfol^{®} CR 6-2-Folien**

| **Beispiel** | **Optischer Eindruck und Haptik¹** | **Glanz 60°**² | **Lösemittelbeständigkeit** (1min statisch) ³ in EtAc / MPA / X EtOH / SB / H₂O | **Crockmetertest ⁴** - / + Ethanol Hübe dynamisch |
|---|---|---|---|---|
| **7 (erf.)** | leicht perforiert 1 | 1,6 | 5 / 4 / 5 2 / 4 / 0 | >100 / 20 |
| **8 (erf.)** | leicht perforiert 2 | 1,7 | 4 / 4 / 4 3 / 3 / 0 | >100 / 10 |
| **9 (Vgl.)** | leicht perforiert 2-3 | 0,5 | 4 / 3 / 3 2 / 2 / 0 | >100 / 15 |
| **10 (Vgl.)** | einwandfrei 5 | 0,6 | 1 / 0 / 1 1 / 1 / 0 | 80 / 10 |
| **11 (Vgl.)** | einwandfrei 5 | 0,7 | 1 / 0 / 0 1 / 0 / 0 | 50 / 80 |
| **12 (Vgl.)** | einwandfrei 5 | 0,3 | 2 / 0 / 0 1 / 1 / 0 | >100 / 15 |

### Tiefziehfähigkeit mittels Hochdruckverformung:

Die gemäß der Beispiele 7 bis 12 beschichteten Bayfol^{®} 6-2-Folien wurden gemäß DE-A 38 40 542 verformt. Die Versuche wurden auf einer Hochdruckverformungsanlage der Fa. HDVF Kunststoffmaschinen GmbH, Typ SAMK 360 durchgeführt. Als Verformwerkzeug wurden für die Hinterspritzversuche eine Heizungslüftungsblende verwendet. Die Verformungsparameter wurden wie folgt gewählt: Heizrate 13 sec, Heizfeldereinstellung 240°C-280°C, Werkzeugtemperatur 100°C, Verformungsdruck 120 bar. Die verformten Folien werden entsprechend der Form ausgestanzt. Visuell wurde die Haftung, die Rissbildung und Weißverfärbung der Beschichtungen nach der Verformung beurteilt.

**Tabelle 6: Prüfergebnisse der mit den Lacken 7-12 beschichteten Bayfol^{®} CR 6-2-Folien**

| **Beispiel** | **Pendelhärte⁵ [s]** | **Tiefziehverhalten⁶ bei 12s Heizrate Werkzeug: 2 Blenden** |
|---|---|---|
| **7 (erf.)** | 45 | 0-1 |
| **8 (erf.)** | 29 | 1 |
| **9 (Vgl.)** | 42 | 3 |
| **10 (Vgl.)** | 45 | 5 |
| **11 (Vgl.)** | 73 | 5 |
| **12 (Vgl.)** | 22 | 4 |

Die in den Tabellen 5 und 6 aufgeführten Ergebnisse belegen, dass nur mit den speziellen pigmentierten Soft-Touch-Lacken gemäß Erfindung (Beispiele 7 und 8) sehr gute Tiefziehfähigkeiten der beschichteten Folie erhalten werden können.

### Beispiel 13: Auftragung mittels Siebdruck

Die Herstellung des sogenannten Stammlacks entsprechend der Versuche 1 bis 12 erfolgte nach Vordispergierung durch Anreibung über einen Laborschüttler. Die Temperatur der Dispersion sollte 40 °C nicht überschreiten. Anschließend wurde OK 412 ca. 10 min. eingerührt. Nach Vernetzung mit Bayhydur^{®} 3100 wurde das Lacksystem mit Borchigel 1 75 (25 % in Wasser; Eindicker der Fa. Borchers) mittels Glasstab vermengt. Danach wurde auf die rauhe Seite von Bayafol^{®} CR mittels Siebdruck angedruckt und 10 min bei Raumtemperatur gelagert. Anschließend wurde bei 65 °C im Tunneltrockner bei 2 m / min getrocknet.

Die Lackschichtdicke beträgt ca. 10 µm.

Beurteilung: Die mit den Soft-Touch-Lacken der Beispiele 1, 2, 7 und 8 bedruckten Folien hatten einen angenehmen Griff und ließen sich ohne Weißbruch und Rissbildung unter Druck (HPF) verformen.

### Beispiel 14: Hinterspritzbarkeit

Die ausgestanzten, geformten und mit Lack beschichteten Folien wurden so in die geöffnete Spritzgießform eingelegt, dass die mit Soft-Touch-Lack beschichtete Seite der geformten Folie aus den Beispielen 1 bis 12 dem Anspritzpunkt des thermoplastischen Kunststoffs gegenüberlag. Die Folie wurde im Werkzeug durch elektrostatische Aufladung fixiert. Nach Schließen des Werkzeugs wurde Bisphenol A-Polycarbonat mit einer rel. Viskosität von 1,3 (gemessen in Dichlormethan bei 20°C und einer Konzentration von 0,5 g/100 cl) eingespritzt. Die Gesamtdicke des Fertigteils betrug 6 mm.

Beurteilung: Nach dem Hinterspritzen wiesen die mit dem Soft-Touch-Lack beschichteten Verbundformteile keine Glanzstellen auf. Auch die mit kleinen Radien verformten Bereiche der hinterspritzten Verbundfolie wiesen über die gesamte Fläche homogene Mattierung und angenehmen Griff auf.

## Patentansprüche

1. Verbundformteile aus Kunststoff bestehend aus
A) einer thermoplastisch verformbaren, wärmebeständigen Verbundfolie bestehend aus
A1) einer Trägerfolie aus thermoplastischem Kunststoff und
A2) einer Beschichtung aus einem Soft-Touch-Lack auf einer Seite der Trägerfolie (A1)
und
B) einer thermoplastischen Kunststoffschicht auf der dem Soft-Touch-Lack abgewandten Seite der Trägerfolie (A1)
**dadurch gekennzeichnet, dass** der Soft-Touch-Lack (A2) aus
i) hydroxyl- und/oder amingruppenfreien Polyurethanen und/oder Polyurethanharnstoffen
ii) ionisch modifizierten, hydroxyl- und/oder amingruppenhaltigen Polyurethanen und/oder Polyurethanharnstoffen
iii) mindestens einem Vernetzer und
iv) gegebenenfalls filmbildenden Harzen
v) gegebenenfalls Hilfsstoffen und/oder Zusatzmitteln
erhältlich ist.

2. Verfahren zur Herstellung der Verbundformteile aus Kunststoff gemäß Anspruch 1, wobei
I) eine thermoplastisch verformbare, wärmebeständige Verbundfolie (A) aus einer Trägerfolie (A1) aus thermoplastischem Kunststoff und einer Beschichtung (A2) aus einem Soft-Touch-Lack auf einer Seite der Trägerfolie (A1) vorgelegt wird und
II) die Folie (A1) mit einem thermoplastischen Kunststoff auf der dem Soft-Touch-Lack abgewandten Seite hinterspritzt, hinterpresst, hintergossen oder hinterschäumt wird, wobei
der Soft-Touch-Lack aus
i) hydroxyl- und/oder amingruppenfreien Polyurethanen und/oder Polyurethanharnstoffen
ii) ionisch modifizierten, hydroxyl- und/oder amingruppenhaltigen Polyurethanen und/oder Polyurethanharnstoffen
iii) mindestens einem Vernetzer und
iv) gegebenenfalls filmbildenden Harzen
v) gegebenenfalls Hilfsstoffen und/oder Zusatzmitteln
erhältlich ist.

3. Verwendung der Verbundformteile in Telekommunikationsgeräten sowie in Kraftfahrzeugen, Schiffen und Flugzeugen.

## Claims

1. Composite mouldings of plastic comprising:
A) a thermoplastically formable, heat-resistant composite film comprising
A1) a carrier film of a thermoplastic
A2) a coating of a soft touch lacquer on one side of the carrier film (A1)
and
B) a thermoplastic layer on the side of the carrier film (A1) facing away from the soft touch lacquer,
**characterized in that** the soft touch lacquer (A2) is obtainable from
i) polyurethanes and/or polyurethane-ureas which are free from hydroxyl and/or amine groups
ii) ionically modified polyurethanes and/or polyurethane-ureas which contain hydroxyl and/or amine groups
iii) at least one crosslinking agent and
iv) optionally film-forming resins
v) optionally auxiliary substances and/or additives.

2. Process for the production of the composite moulding of plastic according to claim 1, wherein
I) a thermoplastically formable, heat-resistant composite film (A) of a carrier film (A1) of a thermoplastic and a coating (A2) of a soft touch lacquer on one side of the carrier film (A1) is initially introduced into the mould and
II) the film (A1) is back-injected, back-pressed, back-cast or back-foamed with a thermoplastic on the side facing away from the soft touch lacquer, wherein
the soft touch lacquer is obtainable from
i) polyurethanes and/or polyurethane-ureas which are free from hydroxyl and/or amine groups
ii) ionically modified polyurethanes and/or polyurethane-ureas which contain hydroxyl and/or amine groups
iii) at least one crosslinking agent and
iv) optionally film-forming resins
v) optionally auxiliary substances and/or additives.

3. Use of the composite mouldings in telecommunications equipment and in motor vehicles, ships and aircraft.

## Revendications

1. Pièces formées composites en matière synthétique consistant en
A) une feuille composite résistante à la chaleur, thermoplastiquement formable, consistant en
A1) une feuille de support en matière synthétique thermoplastique et
A2) un revêtement en peinture soft-touch sur un côté de la feuille de support (A1)
et
B) une couche de matière synthétique thermoplastique sur le côté de la feuille de support (A1) opposé à la peinture soft-touch
**caractérisées en ce que** la peinture soft-touch (A2) peut être obtenue à partir
i) de polyuréthanes et/ou polyuréthaneurées dépourvus de groupes hydroxyle et/ou amino
ii) de polyuréthanes et/ou polyuréthaneurées modifiés ioniquement, contenant des groupes hydroxyle et/ou amino
iii) au moins un réticulant et
iv) éventuellement des résines filmogènes
v) éventuellement des adjuvants et/ou additifs.

2. Procédé de production des pièces formées composites en matière synthétique selon la revendication 1 où
I) une feuille composite (A) résistant à la chaleur, thermoplastiquement formable, consistant en une feuille de support (A1) en matière synthétique thermoplastique et en un revêtement (A2) en une peinture soft-touch sur un côté de la feuille de support (A1) est disposée au préalable et
II) la feuille (A1) est soumise à un moulage par injection, un moulage par compression, une coulée ou une expansion avec une matière synthétique thermoplastique sur le côté opposé à la peinture soft-touch, où
la peinture soft-touch peut être obtenue à partir de
i) polyuréthanes et/ou polyuréthaneurées dépourvus de groupes hydroxyle et/ou amino
ii) polyuréthanes et/ou polyuréthaneurées modifiés ioniquement, contenant des groupes hydroxyle et/ou amino
iii) au moins un réticulant et
iv) éventuellement des résines filmogènes
v) éventuellement des adjuvants et/ou additifs.

3. Utilisation des pièces formées composites dans des appareils de télécommunications ainsi que dans des véhicules automobiles, des navires et des avions.
